# EUROPÄISCHE PATENTSCHRIFT

(11) **EP 0 809 571 B1**
(45) Veröffentlichungstag und Bekanntmachung des Hinweises auf die Patenterteilung: **16.12.1998**
(21) Anmeldenummer: 96900824.2
(22) Anmeldetag: 02.02.1996
(51) Int. Cl.: B32B 5/20, B32B 27/32, B32B 31/30

(54) **VERFAHREN ZUR HERSTELLUNG VON VERPACKUNGSMATERIAL MIT EINER SCHICHT AUS GESCHÄUMTEM POLYOLEFIN**
PROCESS FOR PRODUCING PACKAGING MATERIALS WITH A LAYER OF FOAMED POLYOLEFINE
PROCEDE DE FABRICATION DE MATERIAUX D'EMBALLAGE CONSTITUES D'UNE COUCHE DE POLYOLEFINE MOUSSEE

(30) Priorität: 17.02.1995 CH 465/95
(43) Veröffentlichungstag der Anmeldung: 03.12.1997
(73) Patentinhaber: Convenience Food Systems B.V., 5761 EN Bakel (NL)
(72) Erfinder: LAURENT, Jacques, CH-1807 Blonay (CH); PITTET, Michel, CH-1690 Lussy (CH)
(74) Vertreter: Frei, Alexandra Sarah
(86) Internationale Anmeldenummer: CH9600041
(87) Internationale Veröffentlichungsnummer: WO9625290

(56) Entgegenhaltungen:
- EP-A- 0 344 726
- EP-A- 0 456 890
- EP-A- 0 570 222
- WO-A-90/04517
- DE-A- 3 722 139
- FR-A- 2 388 659

## Beschreibung

Die Erfindung liegt im Gebiete der Verpackungsindustrie und betrifft ein Verfahren gemäss dem Oberbegriff des ersten Patentanspruchs, zur Herstellung von Verpackungsmaterial sowie Verpackungsmaterialien, die nach dem Verfahren hergestellt sind. Das nach dem Verfahren hergestellte Verpackungsmaterial weist eine Schicht aus geschäumtem Polyolefin auf, die mindestens auf der einen Seite mit einem Beschichtungsfilm beschichtet ist.

Verpackungsmaterialien mit einer Schaumstoffschicht aus beispielsweise Polypropylen in der Form von quasi endlosen, aufgerollten Bahnen werden verwendet zur Herstellung von wärmegeformten, selbsttragenden Verpackungen wie beispielsweise Schalen für die Verpackung von Nahrungsmitteln. Derartige Schalen werden, wenn sie gefüllt sind, beispielsweise mit einem durchsichtigen Film verschlossen. Derartige Verpackungsmaterialien sind beispielsweise anwendbar in der sogenannten "FFS-Methode" (form-fill-seal). Für diese Methode wird das bahnförmige Verpackungsmaterial in eine Vorrichtung eingespeist, in dem es zu einer Bahn von Schalen geformt wird und in der die Schalen gefüllt und mit einem Film geschlossen werden. Erst dann werden die Schalen voneinander getrennt.

In den beschriebenen Verpackungsmaterialien ist die Schicht aus geschäumtem Polypropylen entweder auf ihrer einen Seite oder auf beiden Seiten beschichtet. Die Schaumstoffschicht verleiht dem Material die notwendige Steifheit und der Beschichtungsfilm schliesst in erster Linie die Poren des Schaumstoffes, sodass er dicht ist und keine Flüssigkeit in den Schaumstoff eindringen kann. Je nach Zusammensetzung und Dicke des Beschichtungsfilms kann der Film die Steifheit des Verpackungsmaterials erhöhen und/oder kann er als Schutz der Schaumstoffoberfläche oder als Gas- und/oder Aromabarriere dienen. Vielfach trägt der Beschichtungsfilm auf seiner Oberfläche, die vom Schaumstoff weggewandt ist, eine Anschlussschicht, die als Verbindungsschicht zwischen dem Verpackungsmaterial und einem die Verpackung verschliessenden Film dient.

Verpackungsmaterialien mit einer Schicht von geschäumtem Polypropylen zur Herstellung von Schalen durch Wärmeverformung des Materials sind beispielsweise beschrieben in der Publikation EP-A1-0570222. Die beschriebenen Materialien werden hergestellt, indem durch eine Lamination, das heisst durch Einsatz von Wärme und Druck, eine Schaumstoffschicht und ein mehrschichtiger Beschichtungsfilm miteinander verbunden werden. Der Beschichtungsfilm enthält eine Barriereschicht, die das Verpackungsmaterial gas- und aromadicht macht. Der mehrschichtige Beschichtungsfilm braucht eine Verbindungsschicht, die gegen die Schaumstoffschicht gerichtet ist und die aus einem Material bestehen muss, das fähig ist, sich mit dem Schaumstoff zu verbinden, wenn es der Wärme und dem Druck der Lamination ausgesetzt wird. Die Temperaturen, die für den Laminations-Prozess angewandt werden, sind bestimmt durch den Schaumstoff, dessen Struktur bei der Lamination nicht verändert werden soll. Dies bedeutet, dass die Verbindungsschicht des Beschichtungsfilms aus einem Polymer bestehen muss, das bei einer beträchtlich tieferen Temperatur plastisch wird als Polypropylen also beispielsweise aus einem Ethylen-Copolymer.

Die relativ tief schmelzende Verbindungsschicht macht die ganze Schichtstruktur wärmeempfindlich und stellt bezüglich Recycling des Polypropylens ein Fremdmaterial dar. Zusätzlich schränkt sie die Auswahl an Polyolefinen, die für die Schaumstoffschicht anwendbar sind, ein, denn es muss ein Verbindungsmaterial bestehen, das bei einer niedrigeren Temperatur plastisch wird als das Polyolefin der Schaumstoffschicht und das trotzdem die minimalen Anforderungen an die Thermostabiltät erfüllt, die an die herzustellenden Verpackungen gestellt sind. Des weiteren machen die Anforderungen an das Material der Verbindungsschicht die Struktur des Beschichtungsfilms kompliziert, wie dies aus dem Beispiel ersichtlich ist das in der oben genannten Publikation gegeben wird.

In der Publikation EP-344726 sind ähnliche Verpackungsmaterialien beschrieben, die im wesentlichen aus einem geschäumten Kunststoff (z.B. Polypropylen) bestehen, der ein- oder beidseitig beschichtet ist. Als mögliche Herstellungsmethoden für die Verpackungsmaterialien werden Adhäsion (wie EP-0570222) oder Coextrusion angegeben. In der Coextrusionsmethode werden auf den geschäumten Kunststoff wahlweise Schichten aus gleichen oder aus anderen Kunststoffen aufgebracht.

Es ist die Aufgabe der Erfindung, ein Verfahren aufzuzeigen, mit dem Verpackungsmaterialien mit einer Schaumstoffschicht aus einem Polyolefin herstellbar sind, welches Verpackungsmaterial anwendbar ist für die Weiterverarbeitung zu selbsttragenden Verpackungen, wie Schalen für die Verpackung von Nahrungsmitteln, und welches Verfahren es erlauben soll, ein Material herzustellen ohne eine Verbindungsschicht mit einer beträchtlich niedrigeren Thermostabilität als die Schaumstoffschicht sie aufweist. Mit dem erfindungsgemässen Verfahren wird es aus diesem Grunde möglich, das Polyolefin für die Schaumstoffschicht aus einer grösseren Zahl von Polyolefinen auszuwählen, als dies mit den bekannten derartigen Verfahren möglich ist Ferner soll das nach dem erfindungsgemässen Verfahren hergestellte Verpackungsmaterial weniger Fremdmaterial (anderes Material als das Material der Schaumstoffschicht) enthalten, als dies für bekannte derartige Materialien der Fall ist.

Trotzdem soll das erfindungsgemässe Verfahren nicht aufwendiger sein als bekannte Verfahren, die einem gleichen Zweck dienen.

Diese Aufgabe wird gelöst durch das Verfahren, wie es in den Ansprüchen definiert ist.

Das erfindungsgemässe Verfahren basiert auf einem Extrusions/Laminations-Schritt, in dem die aus einem Polyolefin bestehende Schaumstoffschicht beschichtet wird.

Dabei wird eine in einem separaten Extrusions- und Schäumschritt hergestellte Schaumstoffschicht durch Extudieren/Laminieren beschichtet mit einem einschichtigen Beschichtungsfilm, der in einem separaten Extrusionsschritt hergestellt wurde, oder mit einem Multilayer-Beschichtungsfilm, der in einem separaten Coextrusionsschritt hergestellt wurde. Dies bedeutet, dass die Schaumstoffschicht und der Beschichtungsfilm zusammengeführt werden und dass eine weitere Verbindungsschicht dazwischen extrudiert wird. Diese weitere Verbindungsschicht, die im Extrusions/Laminations-Schnitt extrudiert wird, besteht aus einem Polyolefin, das auf dem Hauptmonomer des Schaumstoff-Polyolefins basiert. Unmittelbar nach der Extrusion der weiteren Verbindungsschicht, werden die Schichten zusammengepresst mit einem Druck, der genügend hoch ist, um eine genügende Verbindung zu erzeugen, ohne die Struktur der Schaumstoffschicht zu beeinträchtigen. Der Beschichtungsfilm muss dabei eine gegen Schaumstoff (oder vielmehr gegen die weitere Verbindungsschicht) gewandte Verbindungsschicht aufweisen welche aus einem Polyolefin besteht, das auf demjenigen Monomer basiert, das das Hauptmonomer des Schaumstoff-Polyolefins ist (beispielsweise Propylen). Diese Verbindungsschicht kann die einzige Schicht eines einschichtigen Beschichtungsfilms sein oder die innerste Schicht eines Multilayer-Beschichtungsfilms.

Das nach dem erfindungsgemässen Verfahren hergestellte Verpackungsmaterial weist unmittelbar auf der beschichteten Oberfläche der Schaumstoffschicht zwei Schichten auf, die im wesentlichen aus demselben Polyolefin bestehen wie die Schaumstoffschicht.

Für eine beidseitige Beschichtung einer Schaumstoffschicht können in separaten Extrusions- bzw. Coextrusionsschritten eine Schaumstoffschicht und zwei Beschichtungsfilme hergestellt und diese durch zwei Extrusions/Laminations-Schritte miteinander verbunden werden. Es kann ebenfalls in einem Coextrusionsschritt eine einseitig beschichtete Schaumstoffschicht hergestellt werden, die dann in einem Extrusions/Laminations-Schritt mit einem separat durch Extrusion oder Coextrusion hergestellten Beschichtungsfilm auf der anderen Seite beschichtet wird. In allen genannten Fällen weist das fertige Verpackungsmaterial auf mindestens einer der Oberflächen der Schaumstoffschicht zwei Verbindungsschichten auf, die im wesentlichen aus demselben Polyolefin bestehen wie die Schaumstoffschicht.

Das erfindungsgemässe Verfahren und Verpackungsmaterialien, die nach dem erfindungsgemässen Verfahren hergestellt sind, werden im Zusammenhang mit den folgenden Figuren mehr im Detail beschrieben. Dabei zeigen:
- **Figur 1**: eine beispielhafte Variante des erfindungsgemässen Verfahrens zur Herstellung eines einseitig mit einem Multilayer-Beschichtungsfilm beschichteten Verpackungsmaterials durch Extrusion/Lamination;
- **Figur 2**: eine beispielhafte Variante des erfindungsgemässen Verfahrens zur Herstellung eines Verpackungsmaterials, das auf der einen Seite mit einem einschichtigen, auf der anderen Seite mit einem Multilayer-Beschichtungsfilm beschichtet ist, durch Coextrusion und Extrusion/ Lamination;
- **Figuren 3 bis 5**: Querschnitte durch beispielhafte Beschichtungen von nach dem erfindungsgemässen Verfahren hergestellten Verpackungsmaterialien.

Die im Zusammenhang mit den Figuren beschriebenen Beispiele betreffen alle Verpackungsmaterialien mit einer Schaumstoffschicht aus Polypropylen. Dies soll aber die Erfindung nicht beschränken auf die Herstellung von auf Polypropylen basierenden Verpackungsmaterialien. Dasselbe Verfahren kann angewendet werden zur Herstellung von auf Polyethylen oder anderen Polyolefinen basierenden Verpackungsmaterialien.

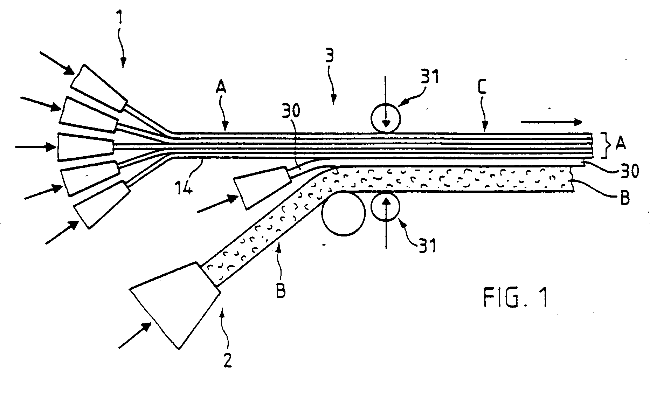

**Figur 1** zeigt schematisch eine beispielhalte Variante des erfindungsgemässen Verfahrens mit drei Verfahrensschritten 1, 2 und 3. Verfahrensschritt 1 ist ein Coextrusions- oder Extrusionsschritt, in dem ein Multilayer-Beschichtungsfilm A (beispielsweise fünfschichtig) oder ein einschichtiger Beschichtungsfilm hergestellt wird. Verfahrensschritt 2 ist ein Extrusions/Expansionsschritt, in dem die Schaumstoffschicht B produziert wird. Verfahrensschritt 3 ist ein Extrusions/Laminations-Schritt, in dem das fertige Verpackungsmaterial C produziert wird, indem zwischen die Schaumstoffschicht B und den Beschichtungsfilm A eine Polyolefinschicht 30 (weitere Verbindungsschicht) extrudiert wird und indem die Schichten dann zusammengepresst werden mit einem Pressdruck der hoch genug ist, um eine genügende Verbindung zwischen den Schichten herzustellen.

Die Schaumstoffschicht hergestellt in Verfahrensschritt 2 besteht aus einem geschäumten Polyolefin. Für die Herstellung von selbsttragenden Verpackungen, wie beispielsweise Schalen für die Verpackung von Nahrungsmitteln, wird vorteilhafterweise Polypropylenschaum verwendet, da ein derartiges Material schon mit einer geringen Dicke und einer geringen Dichte selbsttragend ist. Eine Mischung eines Polypropylen mit Langkettenverzweigung (mit hoher Schmelzfestigkeit) und eines Propylen-Ethylen-Copolymers (z.B. heterophasisches Propylen-Ethylen-Blockcopolymer) geschäumt mit Hilfe eines festen oder gasförmigen Schäummittels ergibt ein Verpackungsmaterial, das wärmeverformbar ist, das aber dank seiner verminderten Sprödheit auch durch Falten zu Verpackungen, wie beispielsweise Schalen, geformt werden kann. Sehr gute Resultate werden erreicht mit einer Mischung, die die beiden Polymere zu gleichen Teilen und 2% eines festen Schäummittels enthält.

Schaumstoffschichten aus Polypropylen, die zur Herstellung von Verpackungsmaterialien für die Formung von selbsttragenden Verpackungen dienen sollen, haben vorzugsweise eine Dicke von 0,5 bis 2 mm und eine Dichte von 0,1 bis 0,8 g/cm³, vorzugsweise von 0,3 g/cm³ und weisen eine Zellenzahl von 100 bis 300 pro mm³ auf. Dichte und Zellenzahl können durch Veränderung des Extrusionsdruckes und anderer Prozessparameter beeinflusst werden.

Das Polyolefin, das in Verfahrensschritt 3 extrudiert wird, muss auf demselben Monomer basieren wie das Polyolefin der Schaumstoffschicht. Für den Fall des oben beschriebenen Schaumstoffes, der aus einer Mischung eines Polypropylens und eines Propylen-Copolymers hergestellt wird, ist dies Polypropylen. Die extrudierte Verbindungsschicht hat vorteilhafterweise eine Dicke von 5 bis 30 µm.

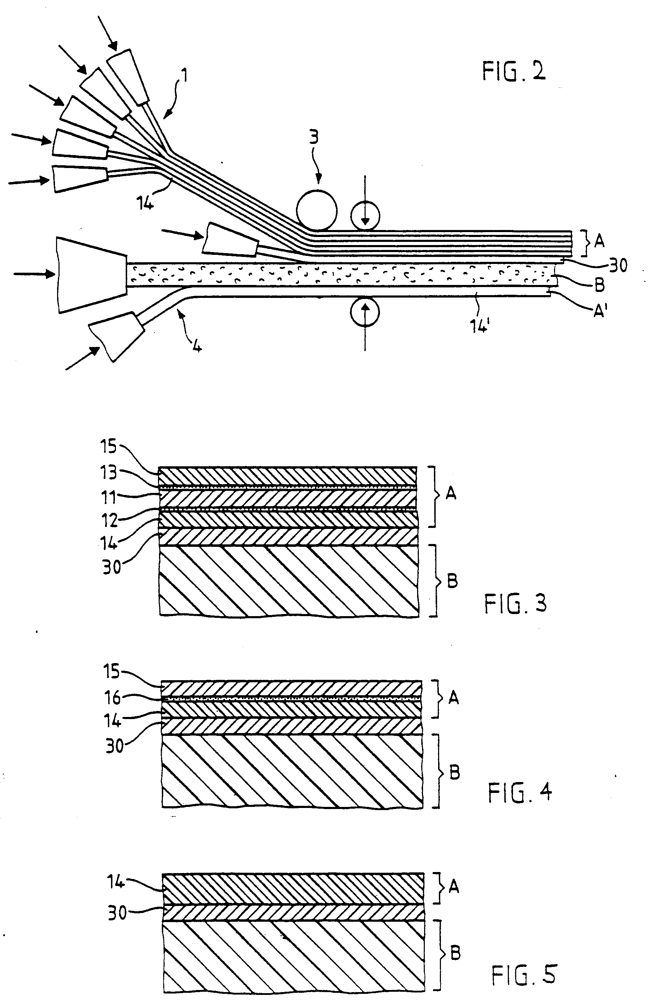

Der Beschichtungsfilm A, der in Verfahrensschritt 1 hergestellt wird, muss mindestens im Bereiche seiner einen Oberfläche aus einem Polyolefin bestehen, das auf dem Monomer basiert, das das Hauptmonomer des Schaumstoff-Polyolefins ist, vorzugsweise aus demselben Polyolefin wie die weitere Verbindungsschicht 30, die in Verfahrensschritt 3 extrudiert wird. Dieses Oberfläche des Beschichtungsfilms A ist in Verfahrensschritt 3 gegen die Schaumstoffschicht zu richten. Beispiele verschiedener Beschichtungsfilme werden im Zusammenhang mit den Figuren 3 bis 5 beschrieben.

Der dritte Verfahrensschritt kann wiederholt werden für eine Beschichtung der anderen Seite der Schaumstoffschicht, wobei die Beschichtungsfilme der beiden Seiten gleich sein können oder verschieden voneinander.

Es ist möglich, Verfahrensschritt 2 und Verfahrensschritt 3 in derselben Vorrichtung durchzuführen, sodass die Schaumstoffschicht innerhalb von Sekunden nach der Extrusion beschichtet wird.

**Figur 2** zeigt eine weitere, beispielhafte Variante des erfindungsgemässen Verfahrens. Nach dieser Variante wird in einem Coextrusionsschritt 4 eine mit einem einschichtigen Beschichtungsfilm A' beschichtete Schaumstoffschicht B hergestellt, die dann in einem Extrusions/Laminations-Schritt 3 mit einem Multilayer-Beschichtungsfilm A beschichtet wird.

**Figuren 3 bis 5** zeigen Querschnitte durch beispielhafte Beschichtungen von Schaumstoffschichten, wie sie nach dem erfindungsgemässen Verfahren herstellbar sind. Alle dargestellten Beschichtungen sind mit Extrusions/Lamination hergestellt und weisen deshalb alle zusätzlich zu der Verbindungsschicht 14, die ein Teil der Beschichtungsfilms ist, eine weitere Verbindungsschicht 30 auf, die im Extrusions/Laminations-Schritt extrudiert wurde.

**Figur 3** zeigt einen Querschnitt durch ein beispielhaftes, mit dem erfindungsgemässen Verfahren herstellbares Verpackungsmaterial. Es besteht aus drei Grundbestandteilen: aus dem Beschichtungsfilm 1, der Schaumstoffschicht B und der weiteren Verbindungsschicht 30, die in einem Extrusions/Laminations-Schritt (Verfahrensschritt 3, Figur 1) zwischen Beschichtungsfilm A und Schaumstoffschicht B extrudiert wird.

Der fünfschichtige Beschichtungsfilm, wie er in der Figur 3 dargestellt ist, weist eine Barriereschicht 11, beispielsweise aus Ethylen-vinylalkohol-Copolymer, auf, Adhesivschichten 12 und 13 auf beiden Seiten der Barriereschicht 11, eine Verbindungsschicht 14, die gegen die weitere Verbindungsschicht 30 gewandt ist, und eine Anschlussschicht 15, beispielsweise aus Polyethylen mit niedriger Dichte oder aus abschälbarem Polyethylen, die beide verbindbar sind mit einem Filmmaterial, mit dem die Verpackung, beispielsweise eine Schale, bedeckt und damit verschlossen werden kann. Die Anschlussschicht 15 kann auch ersetzt sein durch eine Schutzschicht ohne Verschlussfunktion, beispielsweise aus Polypropylen wie die Verbindungsschicht 14. Verpackungsmaterialien mit einer derartigen Schutzschicht sind anwendbar für die Herstellung von Verpackungen die für einen Verschluss nicht wärmebehandelt werden müssen.

Die Adhesivschichten 12 und 13 bestehen aus einem Adhesiv-Material, das sich für Verbindungen mit Ethylen-Vinvlalkohol-Copolymer eignet. Für den dargestellten Fall besteht die erste Adhesivschicht 12, die die Barriereschicht 11 mit der Verbindungsschicht 14 (Polypropylen) verbindet, aus einem Propylencopolymer und die zweite Adhesivschicht 13, die die Barriereschicht 11 mit der Anschlussschicht 15 (Polyethylen) verbindet, aus einem Ethylencopolymer.

Vorteilhafte Dicken für die verschiedenen Schichten in einem Verpackungsmaterial, wie es in der Figur 3 dargestellt ist, sind: Anschlussschicht 15: 10 bis 50 µm, Adhesivschichten 12 und 13: 3 bis 5 µm, Barriereschicht 11: bis zu 10 µm. Verbindungsschicht 14: 5 bis 15 µm, weitere Verbindungsschicht 30: 5 bis 30 µm und Schaumstoffschicht B: 0,5 bis 2 mm.

**Figur 4** zeigt einen Querschnitt durch eine weitere beispielhafte Beschichtung eines Verpackungsmaterials, das mit dem erfindungsgemässen Verfahren herstellbar ist. Die Grundbestandteile sind dieselben wie in Figur 3: Schaumstoffschicht B aus Polypropylen, weitere Verbindungsschicht 30 aus Polypropylen und Beschichtungsfilm A. Der Beschichtungsfilm A besteht aus drei Schichten: Verbindungsschicht 14 aus Polypropylen, Anschlussschicht 15 und, wenn notwendig, eine Adhesivschicht 16 dazwischen.

**Figur 5** zeigt einen Querschnitt durch eine weitere, beispielhafte Beschichtung eines Verpackungsmaterials, das nach dem erfindungsgmässen Verfahren herstellbar ist. Der Beschichtungsfilm A dieses Materials ist ein extrudierter, einschichtiger Film, der aus Polypropylen besteht und der als Verbindungsschicht 14 und als Schutzschicht dient.

Die **Figuren 3 bis 5** zeigen alle nur die eine, beschichtete Oberfläche der Schaumstoffschicht. Die andere Oberfläche kann entweder ebenfalls beschichtet sein oder nicht, wobei alle Kombinationen der drei dargestellten Beschichtungen oder ähnlicher Beschichtungen denkbar sind.

## Patentansprüche

1. Verfahren zur Herstellung von Verpackungsmaterial (C), das zur Formung von selbsttragenden Verpackungen anwendbar ist, das die Form einer quasi endlosen, aufrollbaren Bahn hat und das aus einer Schaumstoffschicht (B) aus einem ersten Polyolefin besteht, die mindestens einseitig mit einem Beschichtungsfilm (A) beschichtet ist, **dadurch gekennzeichnet,** dass in einem ersten Verfahrensschritt (1) durch Extrusion oder Coextrusion ein einschichtiger oder Multilayer-Beschichtungsfilm (A) produziert wird, welcher Beschichtungsfilm (A) aus einem zweiten Polyolefin besteht oder auf mindestens einer seiner Oberflächen eine Verbindungsschicht (14) aus dem zweiten Polyolefin aufweist, dass in einem zweiten Verfahrensschritt (2) die Schaumstoffschicht (B) aus dem ersten Polyolefin durch Extrusion und Schäumung hergestellt wird und dass in einem dritten Verfahrensschritt (3) durch Extrusion/Lamination die Schaumstoffschicht (B) mit dem Beschichtungsfilm (A) beschichtet wird, indem die Schaumstoffschicht (B) mit dem Beschichtungsfilm (A) derart zusammengeführt wird, dass die Verbindungsschicht (14) gegen die Schaumstoffschicht (B) gewandt ist, indem zwischen die Schaumstoffschicht (B) und den Beschichtungsfilm (A) eine weitere Verbindungsschicht (30) aus einem dritten Polyolefin extrudiert wird und indem die Schichten einem Pressdruck ausgesetzt werden, wobei das erste, das zweite und das dritte Polyolefin alle auf demselben Hauptmonomer basieren,

2. Verfahren nach Anspruch 1, **dadurch gekennzeichnet**, dass die weitere Verbindungsschicht (30) eine Dicke von 5 bis 30 µm hat.

3. Verfahren nach Anspruch 1 oder 2, **dadurch gekennzeichnet**, dass der dritte Verfahrensschritt (3) zur Beschichtung der zweiten Oberfläche der Schaumstoffschicht (B) wiederholt wird.

4. Verfahren nach Anspruch 1 oder 2, **dadurch gekennzeichnet**, dass die Schaumstoffschicht, die im dritten Verfahrensschritt (3) durch Extrusion/Lamination auf der einen Seite beschichtet wird, eine Schaumstoffschicht ist, die auf der anderen Seite in einem vorangehenden Coextrusionsschritt bereits beschichtet worden ist.

5. Verfahren nach einem der Ansprüche 1 bis 4, **dadurch gekennzeichnet**, dass das Hauptmonomer des Polyolefins, aus dem die Schaumstoffschicht (B) besteht, Propylen ist.

6. Verfahren nach einem der Ansprüche 1 bis 5, **dadurch gekennzeichnet**, dass der Beschichtungsfilm (A) hergestellt wird durch Coextrusion einer Barriereschicht (11) aus Ethylen-Vinylalkohol-Copolymer, einer Verbindungsschicht (14) aus Polypropylen, die die eine Oberfläche des Beschichtungsfilms bildet, einer Anschlussschicht (15) aus Polyethylen, die die andere Oberfläche des Beschichtungsfilms bildet, einer ersten Adhesivschicht (12) zwischen Barriereschicht (11) und Verbindungsschicht (14) und einer zweiten Adhesivschicht (13) zwischen Barriereschicht (11) und Anschlussschicht (15), wobei die erste Adhesivschicht (12) aus einem Propylen-Copolymer und die zweite Adhesivschicht (13) aus einem Ethylen-Copolymer besteht.

7. Verfahren nach einem der Ansprüche 1 bis 5, **dadurch gekennzeichnet**, dass der Beschichtungsfilm (A) hergestellt wird durch Coextrusion einer Barriereschicht (11) aus Ethylen-Vinylalkohol-Copolymer, einer Verbindungsschicht (14) aus Polypropylen, die die eine Oberfläche des Beschichtungsfilms bildet, einer Schutzschicht aus Polypropylen, die die andere Oberfläche des Beschichtungsfilms bildet, einer ersten Adhesivschicht (12) zwischen Barriereschicht (11) und Verbindungsschicht (14) und einer zweiten Adhesivschicht (13) zwischen Barriereschicht (11) und Schutzschicht, wobei die erste und die zweite Adhesivschicht (12, 13) aus einem Propylen-Copolymer bestehen.

8. Verfahren nach einem der Ansprüche 1 bis 5, **dadurch gekennzeichnet**, dass der Beschichtungsfilm (A) hergestellt wird durch Coextrusion einer Verbindungsschicht (14) aus Polypropylen, die die eine Oberfläche des Beschichtungsfilms bildet, und einer Anschlussschicht (15) aus Polyethylen, die die andere Oberfläche des Beschichtungsfilms bildet, und einer Adhesivschicht (16) zwischen Verbindungsschicht (14) und Anschlussschicht (15).

9. Verfahren nach einem der Ansprüche 1 bis 8, **dadurch gekennzeichnet**, dass das Polyolefin, das für die Herstellung der Schaumstoffschicht (B) verwendet wird, eine Mischung ist aus einem Polypropylen mit Langkettenverzweigung und einem Propylen-Ethylen-Copolymer.

10. Verpackungsmaterial (C) hergestellt nach einem Verfahren nach einem der Ansprüche 1 bis 9, bestehend aus einer Schaumstoffschicht (B) aus einem ersten Polyolefin, welche Schaumstoffschicht (B) mindestens auf der einen Seite mit einem Beschichtungsfilm (A) beschichtet ist **dadurch gekennzeichnet**, dass die Beschichtung der Schaumstoffschicht (B) unmittelbar auf der Oberfläche der Schaumstoffschicht zwei Verbindungsschichten (14, 30) aufweist, die aus weiteren Polyolefinen bestehen, wobei die weiteren Polyolefine auf demjenigen Monomer basieren, das das Hauptmonomer des ersten Polyolefins ist.

11. Verpackungsmaterial nach Anspruch 10, **dadurch gekennzeichnet,** dass es ausserhalb der zwei Verbindungsschichten ( 14, 30) weitere Schichten (11, 12, 13, 15, 16) aufweist.

12. Verpackungsmaterial nach Anspruch 11, **dadurch gekennzeichnet**, dass eine der weiteren Schichten eine Barriereschicht (11) ist.

13. Verpackungsmaterial nach einem der Ansprüche 10 bis 12, **dadurch gekennzeichnet**, dass das erste und die weiteren Polyolefine auf Propylen basierende Polyolefine sind.

14. Verpackungsmaterial nach Anspruch 13, **dadurch gekennzeichnet**, dass die Verbindungsschicht (14) zusammen mit der weiteren Verbindungsschicht (30) eine Dicke haben von 5 bis 60 µm.

15. Verpackungsmaterial nach einem der Ansprüche 10 bis 14, **dadurch gekennzeichnet**, dass mindestens eine der äussersten Schichten des Verpackungmaterials eine Anschlussschicht (15) aus Polyethylen niedriger Dichte oder aus abschälbarem Polyethylen ist.

16. Verpackungsmaterial nach einem der Ansprüche 10 bis 15, **dadurch gekennzeichnet**, dass die Schaumstoffschicht (B) beidseitig beschichtet ist und dass die beiden Beschichtungsfilme (A, A') voneinander verschieden sind.

## Claims

1. Process for producing packaging material (C) which can be used to form self-supporting packaging and which has the form of a quasi-continuous, windable web and which is composed of a foam layer (B) made from a first polyolefin and coated on at least one side with a film (A), **characterized in that**, in a first step (1) extrusion or coextrusion is used to produce a single- or multilayer film (A) which is composed of a second polyolefin or has on at least one of its surfaces a bonding layer (14) made from the second polyolefin, in that in a second step (2) extrusion and foaming are used to produce the foam layer (B) from the first polyolefin, and in that in a third step (3) extrusion/lamination is used to coat the foam layer (B) with the film (A), by bringing the foam layer (B) together with the film (A) in such a way that the bonding layer (14) faces the foam layer (B), by extruding, between the foam layer (B) and the film (A), a further bonding layer (30) made from a third polyolefin, and subjecting the layers to bonding pressure, where the first, second and third polyolefins are all based on the same principal monomer.

2. Process according to Claim 1, **characterized in that** the further bonding layer (30) has a thickness of from 5 to 30 µm.

3. Process according to Claim 1 or 2, **characterized in that** the third step (3) is repeated to coat the second surface of the foam layer (B).

4. Process according to Claim 1 or 2, **characterized in that** the foam layer which is coated on one side by extrusion/lamination in the third step (3) is a foam layer which has already been coated on its other side in a previous coextrusion step.

5. Process according to one of Claims 1 to 4, **characterized in that** the principal monomer of the polyolefin of which the foam layer (B) is composed is propylene.

6. Process according to one of Claims 1 to 5, **characterized in that** the film (A) is produced by coextruding a barrier layer (11) made from ethylene-vinyl alcohol copolymer, a polypropylene bonding layer (14) forming one surface of the film, a polyethylene interfacing layer (15) forming the other surface of the film, a first adhesive layer (12) between barrier layer (11) and bonding layer (14) and a second adhesive layer (13) between barrier layer (11) and interfacing layer (15), where the first adhesive layer (12) is composed of a propylene copolymer and the second adhesive layer (13) is composed of an ethylene copolymer.

7. Process according to one of Claims 1 to 5, **characterized in that** the film (A) is prepared by coextruding a barrier layer (11) made from ethylene-vinyl alcohol copolymer, a polypropylene bonding layer (14) forming one surface of the film, a polypropylene protective layer forming the other surface of the film, a first adhesive layer (12) between barrier layer (11) and bonding layer (14) and a second adhesive layer (13) between barrier layer (11) and protective layer, where the first and second adhesive layers (12 and 13) are composed of a propylene copolymer.

8. Process according to one of Claims 1 to 5, **characterized in that** the film (A) is prepared by coextruding a polypropylene bonding layer (14) forming one surface of the film and a polyethylene interfacing layer (15) forming the other surface of the film and an adhesive layer (16) between bonding layer (14) and interfacing layer (15).

9. Process according to one of Claims 1 to 8, **characterized in that** the polyolefin used for preparing the foam layer (B) is a mixture of a polypropylene with long-chain branching and a propylene-ethylene copolymer.

10. Packaging material (C) produced by a process according to one of Claims 1 to 9 and composed of a foam layer (B) made from a first polyolefin, which foam layer (B) has been coated on at least one side with a film (A), **characterized in that** the coating of the foam layer (B) has, directly on the surface of the foam layer, two bonding layers (14, 30) which are composed of other polyolefins, where the other polyolefins are based on the monomer which is the principal monomer of the first polyolefin.

11. Packaging material according to Claim 10, **characterized in that** it has, in addition to the two bonding layers (14, 30), further layers (11, 12, 13, 15, 16).

12. Packaging material according to Claim 11, **characterized in that** one of the further layers is a barrier layer (11).

13. Packaging material according to one of Claims 10 to 12, **characterized in that** the first and the other polyolefins are polyolefins based on propylene.

14. Packaging material according to Claim 13, **characterized in that** the bonding layer (14) and the further bonding layer (30) have a thickness of from 5 to 60 µm.

15. Packaging material according to one of Claims 10 to 14, **characterized in that** at least one of the outermost layers of the packaging material is an interfacing layer (15) made from low-density polyethylene or from peelable polyethylene.

16. Packaging material according to one of Claims 1 to 15, **characterized in that** the foam layer (B) is coated on both sides and that the two films (A, A') are different from one another.

## Revendications

1. Procédé de fabrication d'un matériau d'emballage (C), qui peut être utilisé pour façonner des emballages autoportants, qui a la forme d'une bande presque continue, pouvant être enroulée, et qui est constitué d'une couche d'un matériau expansé (B) en une première polyoléfine, couche qui au moins sur une face est revêtue d'un film de revêtement (A), caractérisé en ce que, dans une première étape (1) du procédé, on produit par extrusion ou coextrusion un film de revêtement (A) monocouche ou multicouche, lequel film de revêtement (A) est constitué d'une deuxième polyoléfine ou présente sur au moins l'une de ses faces une couche de liaison (14) en la deuxième polyoléfine ; que, dans une deuxième étape (2) du procédé, on fabrique par extrusion et expansion la couche de matériau expansé (B) en la première polyoléfine ; et que, dans une troisième étape (3) du procédé, on applique le film de revêtement (A) sur la couche de matériau expansé (B) par extrusion/stratification, en réunissant la couche de matériau expansé (B) et le film de revêtement (A), de telle sorte que la couche de liaison (14) soit dirigée contre la couche de matériau expansé (B), en extrudant entre la couche de matériau expansé (B) et la couche de revêtement (A) une couche de liaison supplémentaire (30) en une troisième polyoléfine, et en exposant les couches à une pression de compression, de sorte que la première, la deuxième et la troisième polyoléfines ont toutes pour base le même monomère principal.

2. Procédé selon la revendication 1, caractérisé en ce que la couche de liaison supplémentaire (30) a une épaisseur de 5 à 30 µm.

3. Procédé selon la revendication 1 ou 2, caractérisé en ce que la troisième étape (3) du procédé est répétée pour revêtir la deuxième face de la couche (B) de matériau expansé.

4. Procédé selon la revendication 1 ou 2, caractérisé en ce que la couche de matériau expansé qui, dans la troisième étape (3) du procédé est par extrusion/ stratification revêtue sur une face, est la couche de matériau expansé qui a déjà été , sur l'autre face, revêtue dans le cadre d'une étape de co-extrusion préalable.

5. Procédé selon l'une des revendications 1 à 4, caractérisé en ce que le monomère principal de la polyoléfine dont est constituée la couche de matériau expansé (B) est le propylène.

6. Procédé selon l'une des revendications 1 à 5, caractérisé en ce que le film de revêtement (A) est fabriqué par co-extrusion d'une couche barrière (11) en un copolymère éthylène-alcool vinylique, d'une couche de liaison (14) en polypropylène, qui forme une face du film de revêtement, d'une couche de raccordement (15) en polyéthylène, qui forme l'autre face du film de revêtement, d'une première couche adhésive (12) entre la couche barrière (11) et la couche de liaison (14), et d'une deuxième couche adhésive (13) entre la couche barrière (11) et la couche de raccordement (15), la première couche adhésive (12) étant constituée d'un copolymère du propylène et la deuxième couche adhésive (13) étant constituée d'un copolymère de l'éthylène.

7. Procédé selon l'une des revendications 1 à 5, caractérisé en ce que le film de revêtement (A) est fabriqué par co-extrusion d'une couche barrière (11) en un copolymère éthylène-alcool vinylique, d'une couche de liaison (14) en polypropylène, qui forme une surface du film de revêtement, d'une couche de protection en polypropylène, qui forme l'autre face du film de revêtement, d'une première couche adhésive (12) entre la couche barrière (11) et la couche de liaison (14), et d'une deuxième couche adhésive (13) entre la couche barrière (11) et la couche de protection, la première et la deuxième couches adhésives (12, 13) étant constituées d'un copolymère du propylène.

8. Procédé selon l'une des revendications 1 à 5, caractérisé en ce que le film de revêtement (A) est fabriqué par co-extrusion d'une couche de liaison (14) en polypropylène, qui forme une face du film de revêtement, et d'une couche de raccordement (15) en polyéthylène, qui forme l'autre face du film de revêtement, et d'une couche adhésive (16) entre la couche de liaison (14) et la couche de raccordement (15).

9. Procédé selon l'une des revendications 1 à 8, caractérisé en ce que la polyoléfine qui est utilisée pour fabriquer la couche de matériau expansé (B) est un mélange d'un polypropylène ayant une ramification de chaînes longues et d'un copolymère propylène-éthylène.

10. Matériau d'emballage (C) fabriqué par un procédé selon l'une des revendications 1 à 9, constitué d'une couche de matériau expansé (B) en une première polyoléfine, laquelle couche de matériau expansé (B) est au moins sur une face revêtue d'un film de revêtement (A), caractérisé en ce que le revêtement de la couche de matériau expansé (B) comporte, immédiatement sur la face de la couche de matériau expansé, deux couches de liaison (14, 30), qui sont constituées d'autres polyoléfines, les autres polyoléfines ayant pour base le monomère qui est le monomère principal de la première polyoléfine.

11. Matériau d'emballage selon la revendication 10, caractérisé en ce qu'il comporte des couches supplémentaires (11, 12, 13, 15, 16) à l'extérieur des deux couches de liaison (14, 30).

12. Matériau d'emballage selon la revendication 11, caractérisé en ce que l'une des autres couches est une couche barrière (11).

13. Matériau d'emballage selon l'une des revendications 10 à 12, caractérisé en ce que la première polyoléfine et les autres polyoléfines sont des polyoléfines à base de propylène.

14. Matériau d'emballage selon la revendication (13), caractérisé en ce que la couche de liaison (14) a, avec l'autre couche de liaison (30), une épaisseur de 5 à 60 µm.

15. Matériau d'emballage selon l'une des revendications 10 à 14, caractérisé en ce qu'au moins l'une des couches extérieures du matériau d'emballage est une couche de raccordement (15) en polyéthylène basse densité, ou en polyéthylène pelable.

16. Matériau d'emballage selon l'une des revendications 10 à 15, caractérisé en ce que la couche de matériau expansé (B) est revêtue sur ses deux faces, et que les deux films de revêtement(A, A') sont différents l'un de l'autre.
